# EUROPÄISCHE PATENTSCHRIFT

(11) **EP 0 914 399 B1**
(45) Veröffentlichungstag und Bekanntmachung des Hinweises auf die Patenterteilung: **15.11.2000**
(21) Anmeldenummer: 97936660.6
(22) Anmeldetag: 25.07.1997
(51) Int. Cl.: C09K 5/06

(54) **VERFAHREN/SYSTEM ZUR SPEICHERUNG VON WÄRME ODER KÄLTE IN EINEM SPEICHERVERBUNDMATERIAL, EIN DERARTIGES SPEICHERVERBUNDMATERIAL UND EIN VERFAHREN ZUR HERSTELLUNG EINES DERARTIGEN SPEICHERVERBUNDMATERIALS**
METHOD/SYSTEM FOR ACCUMULATING HEAT OR COLD IN AN ACCUMULATING COMPOSITE MATERIAL, SUCH AN ACCUMULATING COMPOSITE MATERIAL AND A METHOD FOR PRODUCING SUCH AN ACCUMULATING COMPOSITE MATERIAL
PROCEDE/SYSTEME D'ACCUMULATION DE CHALEUR OU DE FROID DANS UN MATERIAU COMPOSITE ACCUMULATEUR, UN TEL MATERIAU COMPOSITE ACCUMULATEUR ET PROCEDE DE FABRICATION D'UN TEL MATERIAU

(30) Priorität: 25.07.1996 DE 19630073
(43) Veröffentlichungstag der Anmeldung: 12.05.1999
(73) Patentinhaber: ZAE Bayern Bay. Zentrum für Angewandte Energieforschung E.V., 85748 Garching/Mü. (DE)
(72) Erfinder: SATZGER, Peter, D-86899 Landsberg (DE); ESKA, Benedikt, D-85748 Garching (DE); SCHMITT-MANDERBACH, Tobias, D-80799 München (DE)
(74) Vertreter: Winter, Brandl & Partner
(86) Internationale Anmeldenummer: EP9704061
(87) Internationale Veröffentlichungsnummer: WO9804644

(56) Entgegenhaltungen:
- EP-A- 0 616 844
- US-A- 4 003 426
- US-A- 4 572 864
- US-A- 4 595 774

## Beschreibung

Die Erfindung betrifft ein Verfahren/System zur Speicherung von Wärme oder Kälte in einem Speicherverbundmaterial, das eine Matrix aus gepreßten Graphitexpandat und einem Phasenwechselmaterial (PCM) als Wärme- bzw. Kältespeichermedium enthält, ein derartiges Speicherverbundmaterial und ein Verfahren zur Herstellung eines derartigen Speicherverbundmaterials.

Die Technologie der Speicherung thermischer Energie ist wichtig, da durch die zeitliche Entkoppelung von Energieangebot und -nachfrage einerseits Energie eingespart werden kann und andererseits wirtschaftliche Vorteile erreicht werden können. Außerdem wird die Anwendung von periodischen zur Verfügung stehenden Energiequellen, wie z.B. der Sonnenenergie, ermöglicht. Es ist bekannt, daß zur Speicherung von Wärme oder Kälte Phasenübergänge mit einer Wärmetönung teilweise auch zusammen mit chemischen Reaktionen verwandt werden können. Sehr häufig werden Stoffe mit dem Phasenübergang fest-flüssig - meist als PCM (phase change material) bezeichnet - vorgeschlagen, so z.B. Wasser zur Kältespeicherung. Es können aber auch Phasenübergänge fest-gasförmig genutzt werden beispielsweise Gas-Feststoff-Reaktionen.

Mit allen diesen thermischen Energiespeichermöglichkeiten ergeben sich eine oder mehrere der folgenden technischen Schwierigkeiten, die überwunden werden müssen: Volumenänderung beim Phasenübergang, Unterkühlung, Trennung von Komponenten, Agglomeration, geringe thermische Leitfähigkeit, kostspielige Wärmetauschererfordernisse.

Die Gas-Feststoff-Reaktionen erfordern zusätzlich, daß der Feststoffreaktor, in dem das Gas mit dem Feststoff reagiert, eine hohe Gaspermeabilität hat. Bei Gas-Feststoff-Reaktionen wurde eine Matrix aus gepreßtem, expandierten Graphit als Trägermaterial für den Feststoff (US-Patent 4.595.774) vorgeschlagen. Der reaktive Feststoff wird dazu, mit Graphitexpandat gemischt, zu einem Reaktionsverbund gepresst. Diese inerte Graphitmatrix ist elastisch und kann somit bis zu einem gewissen Grade eine Schwellung des reaktiven Feststoffs auffangen. Außerdem hat sie eine hohe Wärmeleitfähigkeit und eine hohe Gaspermeabilität aufgrund der hohen Porosität von bis zu 90%.

Bei einer starken Reduzierung der Porosität durch eine hohe Beladung der Matrix mit dem reaktiven Feststoff muß durch die Graphitmatrix eine entsprechend größere Schwellung aufgefangen werden. Wird die Beladung zu groß, entsprechend einer Reduktion der Porosität auf unter 60%, so wird die Graphitmatrix durch die während der Reaktion auftretende Schwellung beschädigt und damit werden die Eigenschaften der Matrix, wie die hohe Gaspermeabilität und die gute Wärmeleitung, stark beeinträchtigt. Der Einsatz der Graphitmatrix wird also durch die Fähigkeit der Matrix, die Schwellung aufnehmen zu können, begrenzt.

Es ist außerdem bekannt, daß PCMs für fest-flüssig Phasenübergänge in Matrizen aus verschiedenen Materialien eingebracht werden können. So wurde z.B. vorgeschlagen, PCM als Speicher in eine nicht gehärtete Polymermatrix einzubauen, US-Patent 4 003 426. Wie in dem Patent angegeben, ist diese Methode aber nur bei solchen Speichermaterialien für thermische Energie brauchbar, die stabile Dispersionen mit den nicht gehärteten Polymeren ergeben, was lediglich für einige wenige Stoffe möglich ist.

Ebenso wurde vorgeschlagen (US 4 572 864), dem PCM gewöhnliches Graphitpulver zuzugeben, um die Wärmeleitfähigkeit der Mischung zu erhöhen. Jedoch bildet die Zugabe von nicht expandiertem Graphit keine Matrixstruktur, die die Schwellung des PCM's während des Phasenwechsels aufnehmen könnte.

Aus EP-A-616844 ist es bekannt komprimierten expandierten Graphit mit einer Salzlösung zu imprägnieren. Anschließend wird die Trägerflüssigkeit wieder entfernt, so daß nur das Salz zurückbleibt.

Der Einsatz einer Graphitmatrix für die Wärme/Kältespeicherung mit PCM war aus zwei Gründen bisher nicht möglich:
1. Eine hohe Beladung der inerten Graphitmatrix mit einem reaktiven Feststoff, so daß die Porosität des Speicherverbundes unter 60% liegt, wie sie für einen Speicher mit PCM notwendig ist, um eine hohe Energiedichte zu realisieren, hatte bei Gas-Feststoff-Reaktionen negative Auswirkungen auf die Porosität, Gaspermeabilität und Elastizität. Aus diesem Grund wurde erwartet, daß die Graphitmatrix durch die Volumenänderung bei der Phasenumwandlung eines PCM zerstört wird.
2. Beladungen, die eine Restporosität des Verbundes von kleiner als 40% ergeben, waren mit den bisherigen Herstellungsmethoden nicht möglich.

Der Erfindung liegt die Aufgabe zugrunde ein Verfahren/System zur Speicherung von Wärme oder Kälte in einem Speicherverbundmaterial mit einem Phasenwechselmaterial anzugeben. Weiter ist es Aufgabe der Erfindung hierfür ein besonders geeignetes Speicherverbundmaterial sowie ein Verfahren zu dessen Herstellung anzugeben.

Die Lösung dieser Aufgaben erfolgt durch die Merkmale des Anspruchs 1, 2, 4, 9 bzw. 15.

Es wurde überraschend festgestellt, daß eine Graphitmatrix, die durch Verpressen von expandiertem Graphit hergestellt wird und wie sie aus der US-A-4 595 774 bekannt ist, trotz hoher Beladung der Graphitmatrix mit einem PCM durch den Phasenwechsel nicht zerstört wird, sofern der 'Phasenwechsel zwischen fest-fest, flüssig-flüssig oder fest-flüssig erfolgt. Damit ergibt sich ein Verfahren und eine Vorrichtung (System) zur Speicherung von Wärme oder Kälte unter Verwendung des erfindungsgemäßen Speicherverbundmaterials.

Diese überraschende Stabilität der Matrix aus gepreßtem, expandiertem Graphit läßt sich durch Zugabe von Bindemitteln, wie z. B. Phosphate (z. B. Äluminiumphosphat), Alkalisilikate, Tone, Tonminerale, Aluminiumoxid, Harze und/oder Stärke weiter erhöhen. Bei einer Raumdichte der Graphitmatrix von mehr als 75 g/l ergibt sich trotz der Schwellung des PCMs auch ohne Bindemittel ein stabiler Verbund, wenn die Beladung der Matrix mit PCM auf vorzugsweise 90% des zur Verfügung stehenden Porenvolumens begrenzt wird. Es verbleibt somit eine Restporosität von ca. 10%.

Die meisten der vorgeschlagenen Anwendungen für PCMs liegen im Temperaturbereich von -25 bis 150°C. Mit herkömmlichen Mitteln ist es allerdings schwierig, für eine bestimmte Anwendung ein geeignetes Speicherverbundmaterial bereitzustellen. So ist, wie oben beschrieben, bei der Polymermatrix die Auswahl an möglichen PCMs stark eingeschränkt. Hingegen unterliegt die Graphitmatrix gemäß der vorliegenden Erfindung nicht diesen Einschränkungen, wodurch eine Speicherauslegung stark vereinfacht wird.

Die Graphitmatrix zeichnet sich durch eine Anisotropie sowohl in der Struktur, als auch in der Elastizität aus. Dadurch ist es möglich, daß senkrecht zur Vorzugsrichtung der Graphitschichten eine Ausdehnung der Poren auf Kosten anderer, nicht oder nur teilweise gefüllter Poren möglich ist. Dadurch ergibt sich eine große Toleranz der Matrix gegenüber einer Expansion des PCM's.

Durch diese hohe Elastizität des Speicherverbundmaterials ergibt sich ein großer Vorteil für die Anwendung. Da die Matrix aus gepreßtem, expandiertem Graphit eine so große Elastizität aufeist, daß die Schwellung des PCM (z.B. Wasser/Eis 8%) vollständig intern durch den Verbund aufgefangen werden kann, kann, im Gegensatz zu z.B. heute käuflichen Eisspeichern zur Speicherung von Kälte, auf aufwendige Regelungstechnik zur Verhinderung der vollständigen Kristallisation verzichtet werden, da auch eine vollständige Kristallisation des Speichers nicht zur Zerstörung des Speichers bzw. Speicherbehälters selbst führt.

Überdies kann die bei den PCMs als kritisch anzusehende, aber notwendige Unterkühlung zur Kristallkeimbildung durch das Speicherverbundmaterial gemäß der vorliegenden Erfindung stark reduziert werden. Dadurch kann bei der Wärmeabgabe vom Speicher eine höhere Temperatur erzielt bzw. angelegt werden, was im Falle eines Kältespeichers zur Beladung eine geringere erforderliche Kälteleistung und im Falle eines Wärmespeichers eine höhere Nutztemperatur bedeutet. Im Gegensatz zu den üblicherweise verwendeten Zusätzen als Keimbildner der Phasenumwandlung kann bei der vorliegenden Erfindung das reine PCM verwendet werden. Eine Entmischung, wie sie bei Zugabe von Keimbildnern oft auftritt, ist daher nicht zu befürchten.

Die für wirtschaftlich sinnvolle Wärme- bzw. Kältespeichersyteme notwendigen hohen Beladungen mit PCM lassen sich mit den Herstellungsverfahren für derartige Speicherverbundmaterialien gemäß der vorliegenden Erfindung erreichen. Gemäß Anspruch 10 erfolgt die Einbringung des PCMs in die Graphitmatrix mittels Vakuumimprägnierung.

Um die hohen Beladungen zu erreichen, wird hierbei gemäß einer vorteilhaften Ausgestaltung der Erfindung die Grahitmatrix vor der Imprägnierung auf einem Druck von kleiner 10 mbar und vorzugsweise kleiner 10⁻² mbar evakuiert. Die Beladung läßt sich auch noch dadurch positiv beeinflussen, daß die Graphitmatrix und/oder das jeweils verwandte PCM vor der Imprägnierung auf Temperaturen über den Schmelzpunkt, maximal aber bis zur Verdampfungstemperatur des PCMs, erwärmt wird. Besonders vorteilhaft haben sich hier Temperaturen zwischen 10 und 40K über der Schmelztemperatur des PCMs erwiesen. vorzugseise wird die Graphitmatrix zusammen mit dem PCM erhitzt.

Besonders vorteilhaft ist es, die Verbindung zwischen mit PCM beladener Graphitmatrix und dem Behälter mit flüssigem PCM nach der Vakuumimprägnierung aufrechtzuerhalten und die beladene Graphitmatrix auf eine Temperatur über der Schmelztemperatur des PCMs vorzugsweise auf Zimmertemperatur abzukühlen. Durch das Zusammenziehen der Gasblasen in der Matrix während des Abkühlens entsteht ein Saugeffekt, der die Beladung noch weiter erhöht. Auch wird durch das Abkühlen das Ausgasen des PCMs aus der Graphitmatrix vermindert.

Gemäß Anspruch 15 wird das PCM soweit über den Schmelzpunkt erhitzt, daß die Graphitmatrix-Blöcke in das flüssige PCM eingetaucht werden können. Durch die Kapillarität dringt dann PCM in die Poren der Matrix ein. Mit zunehmender Zeit dringt mehr PCM in die Matrix ein, so daß die Zeitdauer des Eintauchens für die Höhe der Beladung maßgeblich ist. Typische Eintauchzeiten liegen im Bereich zwischen 15 Minuten und 5 Stunden.

Eine höhere Temperatur des PCMs (als auch der Matrix) ist für eine hohe Beladung der Matrix mit PCM förderlich. So erwiesen sich Temperaturen von ca. 40 bis 120 K über dem Schmelzpunkt als sehr förderlich. Durch anschließendes Abkühlen des flüssigen PCMs mit der Matrix bis knapp oberhalb der Schmelztemperatur kann die Beladung weiter erhöht werden.

Mit dem Verfahren nach Anspruch 16 lassen sich Graphitmatrix-Blöcke verschiedenster Form mit einem PCM beladen. Selbst große Blöcke, die sich wegen ihrer Größe nicht für die Vakuumimprägnierung eignen, lassen sich damit imprägnieren.

Ein besonderer Vorteil der Erfindung besteht darin, daß das Speicherverbundmaterial preiswert, ökologisch und leicht herstellbar ist.

Weitere Einzelheiten, Merkmale und Vorteile der Erfindung ergeben sich aus der nachfolgenden Beschreibung beispielhafteer Ausführungsformen der Erfindung anhand der Zeichnung.

Es zeigt
Fig. 1 eine schematische Darstellung zur Erläuterung des Verfahrens der Beladung der Graphitmatrix mit PCM mittels Vakuumimprägnierung;
Fig. 2 eine vergrößerte schematische Darstellung des Speicherverbundmaterials gemäß der vorliegenden Erfindung;
Fig. 3 eine schematische Darstellung des Speicherverbundmaterials in einer Plattenwärmetauscheranordnung; und
Fig. 4 eine schematische Darstellung des Speicherverbundmaterials in einer Rohrbündelwärmetauscheranordnung.

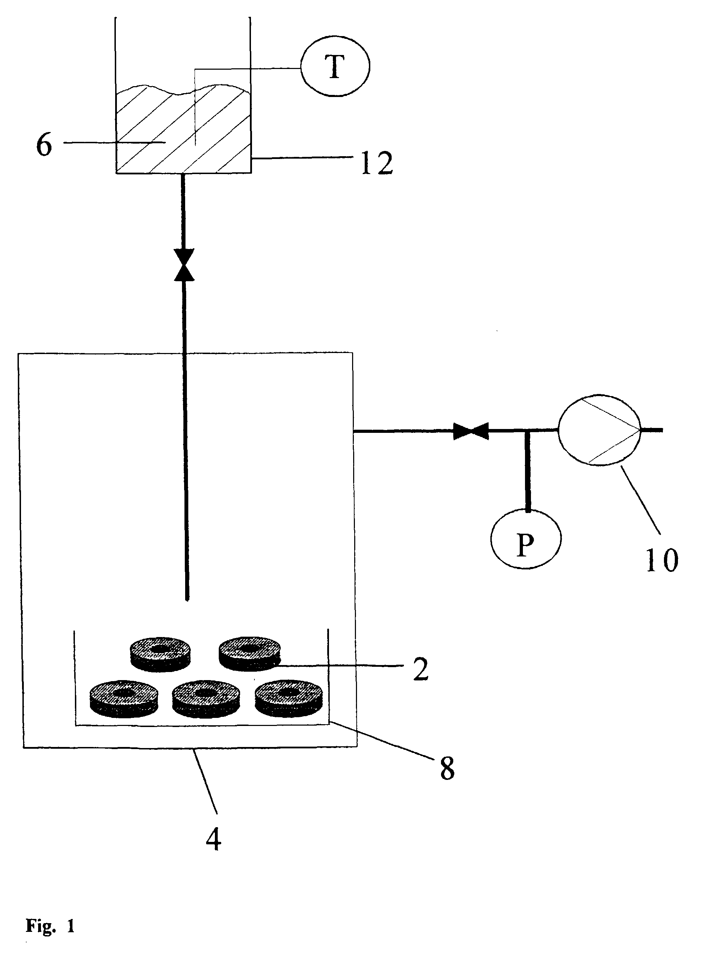

**Fig. 1** zeigt schematisch eine Vorrichtung zur Imprägnierung von Formkörpern **2** aus wiederverpreßten expandiertem Graphit mit flüssigem PCM **6**. Die Formkörper **2** befinden sich innerhalb eines Gefäßes **8** in einem Vakuumbehälter **4**, der durch eine Vakuumpumpe **10** evakuiert werden kann. Nach Evakuierung wird das flüssige PCM **6**, das sich bei einer bestimmten Temperatur im Vorratsgefäß **12** befindet, durch den Druck der Atmosphäre so in den Vakuumbehälter **4** eingelassen, daß sich das Gefäß **8** mit dem flüssigen PCM **6** füllt und die Formkörper **2** voll im flüssigen PCM eingetaucht sind. Nach der Beladung mit dem PCM **6** bildet die Graphitmatrix bzw. der Formkörper **2** zusammen mit dem PCM **6** ein Speicherverbundmaterial **13**.

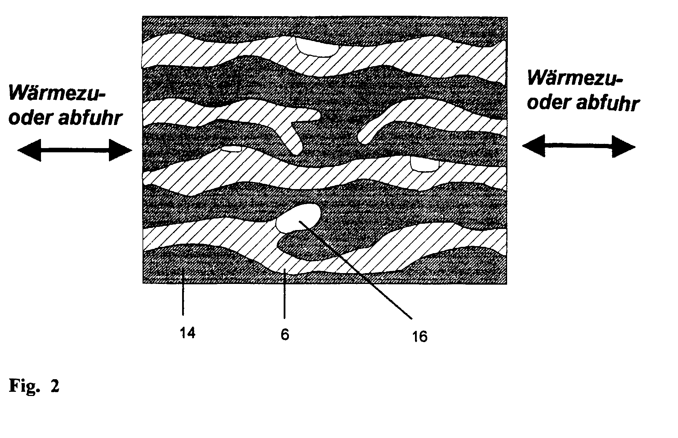

**Fig. 2** zeigt eine schematische Struktur des Speicherverbundmaterials **13** (lateraler Schnitt). Zu sehen ist die durch das Pressen von expandiertem Blähgraphit gebildete poröse Graphitmatrix **14**, die mit dem PCM **6** soweit gefüllt ist, daß noch Gas-/ Dampfeinschlüsse **16** vorhanden sind, die eine Volumenausdehnung des PCM **6** ermöglichen. Die Wärmeein- bzw. auskopplung erfolgt vorzugsweise in der Richtung mit der höchsten Wärmeleitfähigkeit, also in Richtung der sich bildenden Graphitschichten.

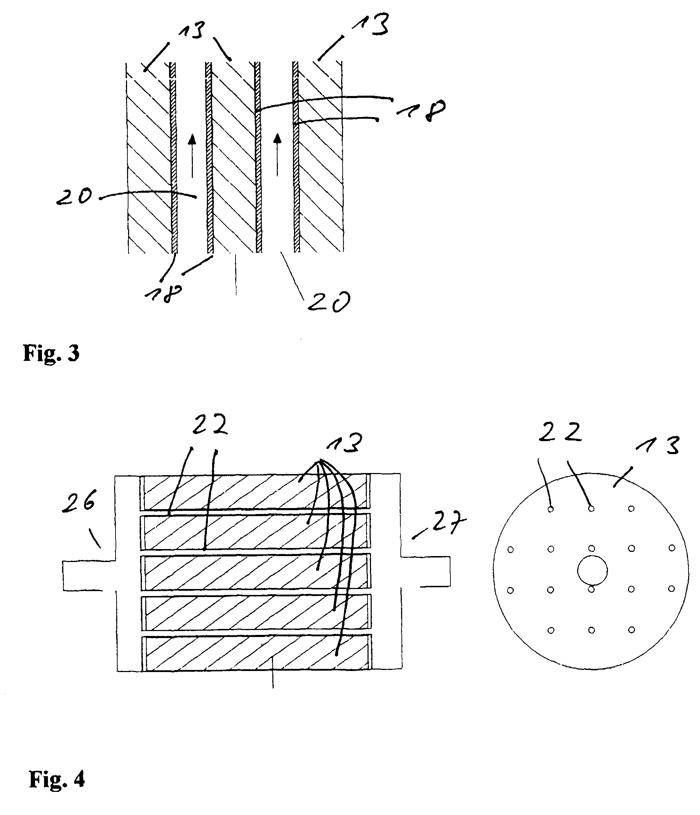

Die Wärmeein- bzw. Wärmeauskopplung kann z. B. sowohl durch Wärmetauscherplatten als auch durch Rohre erfolgen. Fig. 3 zeigt eine schematische Darstellung des Speicherverbundmaterials **13** in einer Plattenwärmetauscheranordnung. Das Speicherverbundmaterial **13** ist plattenförmig mit Begrenzungswänden **18** angeordnet. Zwischen den Begränzungswänden **18** strömt ein Wärmeträgerfluid **20**.

**Fig. 4** zeigt eine schematische Darstellung des Speicherverbundmaterials **13** in einer Rohrbündel-Wärmetauscheranordnung. Das Speicherverbundmaterial **1**3 in Form eines zylindrischen Blocks wird von einem Rohrbündel **22** durchsetzt, das in gemeinsame Zu- und Abführungen **26, 27** mündet.

### Beispiele:

Die folgenden Beispiele 1 bis 4 zeigen Versuche mit Wasser als PCM. Wasser hat als Kältespeichermittel viele Vorteile, wie insbesondere eine hohe Speicherdichte, jedoch zwei große Nachteile, nämlich eine Volumenzunahme von 8% beim Phasenwechsel von flüssig zu fest und eine für diesen Phasenwechsel nötige Unterkühlung von ca. 10K. Deshalb war der Einsatz in kleinen kompakten Kältespeichern bisher sehr schwierig. Wie folgende Beispiele zeigen, können beide Nachteile durch die Erfindung vermieden bzw. entscheidend gemildert werden.

### Beispiel 1:

Es wurde expandiertes Graphit mit einer Schüttdichte von 2 g/l auf zylindrische Tabletten (Durchmesser: 42mm; Höhe: 10mm) verpreßt mit Raumdichten, d.h. Masse pro Bauvolumen, von 36 g/l bis 122 g/l. Die Tabletten wurden bis zu einem Druck von 3*10⁻² mbar evakuiert und anschließend mit dem PCM - destilliertes Wasser - befüllt, so daß eine durchschnittliche Beladung mit Wasser erreicht wurde, die einer Wasser-Raumdichte von 660 g/l entspricht.

Die Verbünde wurden bei -23°C eingefroren und anschließend wieder aufgetaut. Es zeigte sich, daß die Speicherverbünde mit einer Graphitraumdichte bis 75 g/l durch den Gefriervorgang zerstört wurden. Hingegen blieben Speicherverbünde mit über 75 g/l Raumdichte stabil. Auch nach mehrmaligen vollständigen Be- und Entladen des Speichers konnte kein negativer Einfluß auf die Stabilität der Graphitmatrix festgestellt werden.

### Beispiel 2:

Es wurden Preßlinge analog zu Beispiel 1 hergestellt, jedoch war die Raumdichte des Graphits 100 g/l, die Wasserbeladung zeigt Tab. 1, ebenso wie die Drücke, die an die Tabletten axial angelegt wurden.

Die Speicherverbünde wurden jeweils bei -23°C eingefroren und ihre Abmessungen danach mit ihren ursprünglichen Abmessungen verglichen. In Tabelle 1 sind die Parameter und die Ergebnisse zusammengefaßt.

**Tabelle 1:**

| Daten der Volumenausdehung | | | | |
|---|---|---|---|---|
| nach Imprägnierung | | Belastung/ | Ausdehnung | |
| Wasserraumdichte | Porosität | Überdruck | radial | axial |
| g/l | % | bar | % | % |
| 600 | 35,5 | 0 | < 0.5. | 4 |
| 700 | 26 | 0 | < 0,5 | 4 |
| 600 | 35,5 | 0,1 | < 0,5 | 1,5 |
| 700 | 26 | 0,1 | < 0,5 | 1,5 |
| 700 | 26 | 1 | < 0,5 | <0,5 |
| 800 | 15,5 | 1 | <0,5 | <0,5 |
| 1000 | 0 | 0 | | 8 |

Bei externen axialen Drücken von 1 bar kann keine axiale Ausdehnung mehr gemessen werden. Damit wurde festgestellt, daß die Ausdehnung des PCM's Wasser (rein: 8%) bei einem genügend großen, technisch leicht realisierbaren, externen Druck vollständig durch die Graphitmatrix kompensiert werden kann.

### Beispiel 3:

Es wurde ein zylindrischer Speicherverbund mit einer Raumdichte an Graphit von 100 g/l und an Wasser von 900 g/l, analog zu Beispiel 1, hergestellt.

Dieser Verbund wurde in ein Edelstahlrohr eingebracht und mit zwei Edelstahldeckeln verschlossen, durch die zwei NiCr-Ni Thermoelemente durchgeführt wurden, eines in der Mitte des Zylinders und eines bei der Hälfte des Zylinderradiusses. Der Edelstahlbehälter befindet sich in einem Thermobad und kann damit definiert abgekühlt werden. Wird nun die benötigte Unterkühlungstemperatur zur Kristallbildung am Thermoelement erreicht, springt die Temperatur am Thermoelement von der Unterkühlungstemperatur auf die eigentliche Gefriertemperatur des Wasser von 0°C. Es wurde eine benötigte Unterkühlung von ca. 5,5K bestimmt. Durch eine Referenzmessung mit Wasser ohne Graphitmatrix wurde die nötige Unterkühlung für Wasser zu 9,9K gemessen. Durch die Verwendung der Matrix wird also eine Verringerung der Unterkühlung um etwa die Hälfte erreicht.

### Beispiel 4

Es wird eine zylindrische Matrix aus gepreßtem Graphit mit einem Durchmesser von 42mm und einer Höhe von 10 mm und einer Volumendichte von ca. 200 g/l in warmes Wasser eingetaucht, so daß die Matrix vollständig untertaucht. Die Temperatur des Wassers wird konstant gehalten. Nach einer gewissen Zeit wird das Wasser mit der Matrix auf Zimmertemperatur wieder abgekühlt. Anschließend wird die Matrix aus dem Wasser genommen und die Beladung bestimmt.

Folgende Tabelle 2 zeigt die Abhängigkeit der Beladung von der Wassertemperatur, der Einwirkzeit und der Abkühltemperatur

**Tabelle 2**

| Messung | Wassertemperatur | Einwirkzeit | Abkühltemperatur | Beladung mit Wasser | |
|---|---|---|---|---|---|
| Nr. | °C | Minuten | °C | % des Raumvolumens | % des Porenvolumens |
| 1 | 50 | 10 | keine Abkühlung | | 20% |
| 2 | 50 | 30 | keine Abkühlung | | 35% |
| 3 | 50 | 60 | keine Abkühlung | | 46% |
| 4 | 50 | 120 | keine Abkühlung | | 59% |
| 5 | 50 | 18h | keine Abkühlung | | 69% |
| | | | | | |
| 6 | 50 | 60 | 25 | | 77% |
| | | | | | |
| 7 | 90 | 30 | 25 | 71% | 78% |
| 8 | 98,5 | 15 | 25 | 76% | 84% |
| 9 | 98,5 | 60 | 25 | 81% | 89% |

### Beispiel 5

Es wurde Graphitexpandat mit einer Schüttdichte von 2g/l zu Tabletten mit einer Raumdichte von 100 g/l gepreßt. Nach Evakuierung dieser Tabletten auf kleiner als 10⁻² mbar wurden diese mit einer gesättigten wäßrigen Magnesiumacetat-Lösung imprägniert. Im Versuch 1 wurde die Lösung mit Zimmertemperatur zugegeben. Es wurde eine Raumdichte der Lösung von 450 g/l erreicht. Hingegen wurde im Versuch 2 die Lösung auf 36°C erwärmt. Damit wurde anschließend eine Raumdichte der Salzlösung im Speicherverbund von 683 g/l erreicht.

Anstelle von Wasser als PCM lassen sich auch Gemische, insbesondere eutektische oder kongruent schmelzende Gemische einer oder mehrerer der folgenden Komponenten verwenden:

| | | |
|---|---|---|
| CaBr₂ | NaCI | Al(NO₃)₂ |
| CaCl^{·}6H₂O | NaF | Ca(NO₃)₂ |
| CaCl₂ | NaOH | Cd(NO₃)₂ |
| KF | NaOH.3.5H₂O | Co(NO₃)₂ |
| KCI | Na₂HPO₄ | KNO₃ |
| KF^{·}4H₂O | Na₂SO₄ | LiNO₃ |
| LiCIO₃^{·}3H₂O | Na₂SO₄^{·}10H₂O | Mg(NO₃)₂ |
| MgSO₄ | NH₄CI | NaNO₃ |
| MgCI | NH₄H₂PO₄ | Ni(NO₃)₂ |
| ZnCl₂.2.5H₂O | NH₄HCO₃ | Zn(NO₃)₂ |
| ZnSO₄ | NH₄NO₃ | Zn(NO₃)₂^{·}6H₂O |
| Ba(OH)₂ | NH₄F | Cu(NO₃)₂ |
| H₂O | (NH₄)₂SO₄ | Essigsäure |
| SO₃^{·}2H₂O | | Acetate |

Auch Gemische, insbesondere eutektischen oder kongruent schmelzenden Gemisch einer oder mehrerer der folgenden Komponenten sind als PCM geeignet:

Parafine, Fettsäuren, Oligomere, Glykole, Alkohole, Caprylsäure.

Auch Chlatrate bildende Substanzen lassen sich als PCM verwenden.

## Patentansprüche

1. Verfahren zur Speicherung von Wärme oder Kälte mit Hilfe eines einen Phasenübergang durchlaufenden Materials (PCM), **dadurch gekennzeichnet**, daß das den Phasenübergang durchlaufende Material (6) in eine Matrix (14) aus gepreßtem, expandiertem Graphit eingebettet wird, die zusammen ein Speicherverbundmaterial bilden, wobei die Graphitmatrix durch Pressen von expandiertem Graphit hergestellt wird, daß der Phasenübergang zwischen zwei festen oder zwischen einem festen und einem flüssigen oder zwischen zwei flüssigen Aggregatzuständen erfolgt, und daß die Graphitmatrix (14) ohne PCM (6) ein Raumgewicht von 75-1500 g/l und insbesondere von 75-300 g/l besitzt und soviel PCM (6) in die Matrix (14) eingebracht wird, daß das Speicherverbundmaterial eine Restporosität von 2-60% und insbesondere 5-30% zeigt.

2. Vorrichtung zur Speicherung von Wärme oder Kälte mit Hilfe eines einen Phasenübergang durchlaufenden Materials (PCM), **dadurch gekennzeichnet**, daß das den Phasenübergang durchlaufende Material (6) in eine Matrix (14) aus gepreßtem, expandiertem Graphit eingebettet ist, die zusammen ein Speicherverbundmaterial bilden, wobei die Graphitmatrix durch Pressen von expandiertem Graphit hergestellt wird, daß der Phasenübergang zwischen zwei festen oder zwischen einem festen und einem flüssigen oder zwischen zwei flüssigen Aggregatzuständen erfolgt, und daß die Graphitmatrix (14) ohne PCM (6) ein Raumgewicht von 75-1500 g/l und insbesondere von 75-300 g/l besitzt und soviel PCM (6) in die Matrix (14) eingebracht wird, daß das Speicherverbundmaterial eine Restporosität von 2-60% und insbesondere 5-30% zeigt.

3. Verfahren nach Anspruch 1, dadurch gekennzeichnet, daß der Phasenübergang des PCMs (6) im Temperaturbereich von -25°C bis 150°C erfolgt.

4. Speicherverbundmaterial, insbesondere für ein Verfahren/System nach einem der vorhergehenden Ansprüche, mit einem einen Phasenübergang durchlaufenden Material (6), das in einer Matrix (14) aus gepreßtem, expandiertem Graphit eingebettet ist.

5. Speicherverbundmaterial nach Anspruch 4, dg, daß das PCM (6) Wasser ist.

6. Speicherverbundmaterial nach Anspruch 4, dadurch gekennzeichnet, daß das PCM (6) aus einem Gemisch, insbesondere aus einem eutektischen oder kongruent schmelzenden Gemische einer oder mehrerer der folgenden Komponenten besteht:
| | | |
|---|---|---|
| CaBr₂ | NaCl | Al(NO₃)₂ |
| CaCl^{·}6H₂O | NaF | Ca(NO₃)₂ |
| CaCl₂ | NaOH | Cd(NO₃)₂ |
| KF | NaOH.3.5H₂O | Co(NO₃)₂ |
| KCl | Na₂HPO₄ | KNO₃ |
| KF^{·}4H₂O | Na₂SO₄ | LiNO₃ |
| LiCIO₃^{·}3H₂O | Na₂SO₄^{·}10H₂O | Mg(NO₃)₂ |
| MgSO₄ | NH₄Cl | NaNO₃ |
| MgCl | NH₄H₂PO₄ | Ni(NO₃)₂ |
| ZnCl₂.2.5H₂O | NH₄HCO₃ | Zn(NO₃)₂ |
| ZnSO₄ | NH₄NO₃ | Zn(NO₃)₂^{·}6H₂O |
| Ba(OH)₂ | NH₄F | Cu(NO₃)₂ |
| H₂O | (NH₄)₂SO₄ | Essigsäure |
| SO₃^{·}2H₂O | | Acetate |

7. Speicherverbundmaterial nach Anspruch 4, dadurch gekennzeichnet, daß das PCM aus einem eutektischen oder kongruent schmelzenden Gemisch einer oder mehrerer der folgenden Komponenten besteht:
Parafinne, Fettsäuren, Oligomere, Glykole, Alkohole, Caprylsäure.

8. Speicherverbundmaterial nach Anspruch 4, dadurch gekennzeichnet, daß das PCM eine Chlatrate bildende Substanz ist.

9. Verfahren zur Herstellung eines Speicherverbundmaterials nach einem der vorhergehenden Ansprüche 4 bis 8, dadurch gekennzeichnet, daß das PCM (6) in flüssiger Form durch Vakuumimprägnierung in eine Matrix (2; 14), die durch Pressen von expandiertem Graphit hergestellt wird, eingebracht wird, indem die Graphitmatrix (2; 14) evakuiert und in evakuiertem Zustand mit einem Behälter (12) mit dem flüssigen PCM (6) verbunden wird, so daß das flüssige PCM (6) in die Graphitmatrix (2; 14) gesaugt wird.

10. Verfahren nach Anspruch 9, dg, daß die Graphitmatrix (2; 14) vor der Imprägnierung auf einen Druck kleiner als 10 mbar, insbesondere auf einen Druck kleiner 10⁻² mbar evakuiert wird.

11. Verfahren nach Anspruch 9 oder 10, dadurch gekennzeichnet, daß das PCM (6) vor der Imprägnierung über die Schmelztemperatur bis maximal zur Verdampfungstemperatur des PCMs erwärmt wird.

12. Verfahren nach einem der Ansprüche 9 bis 11, dadurch gekennzeichnet, daß die Graphitmatrix (2; 14) vor der Imprägnierung bis auf maximal die Verdampfungstemperatur des PCMs erwärmt wird.

13. Verfahren nach Anspruch einem der Ansprüche 10 bis 12, dg, daß die Graphitmatrix (2; 14) und das PCM (6) zusammen über die Schmelztemperatur bis maximal zur Verdampfungstemperatur des PCMs erwärmt werden.

14. Verfahren nach wenigstens einem der Ansprüche 9 bis 13, dadurch gekennzeichnet, daß die Graphitmatrix (2; 14) nach der Imprägnierung in dem Behälter (8) mit flüssigem PCM (6) verbunden bleibt und auf eine Temperatur über der Schmelztemperatur des PCMs, vorzugsweise auf Zimmertemperatur gekühlt wird.

15. Verfahren zur Herstellung eines Speicherverbundmaterials nach einem der vorhergehenden Ansprüche 4 bis 8, dadurch gekennzeichnet, daß das PCM (6) in flüssiger Form erhitzt und die Graphitmatrix (2; 14) darin eingetaucht eine gewisse Zeit verbleibt, bis das flüssige PCM in die Matrix eingedrungen ist.

16. Verfahren nach Anspruch 15, dadurch gekennzeichnet, daß flüssige PCM (6) mit der darin eingetauchten Matrix (2; 14) bis oberhalb der Schmelztemperatur abgekühlt wird.

17. Verfahren nach Anspruch 15 oder 16, dadurch gekennzeichnet, daß das PCM (6) während der Imprägnierung siedet.

18. Verfahren nach einem der Ansprüche 15 bis 17, dadurch gekennzeichnet, daß das flüssige PCM (6) und die darin eingetauchte Graphitmatrix (2; 14) gemeinsam erhitzt werden.

## Claims

1. Method for accumulating heat or cold with the aid of a material which undergoes a phase transition (PCM), characterized in that the material (6) which undergoes the phase transition is embedded in a matrix (14) of compressed, expanded graphite, together forming a composite accumulator material, the graphite matrix being produced by compressing expanded graphite, in that the phase transition takes place between two solid states of aggregation or between a solid and a liquid state of aggregation or between two liquid states of aggregation, and in that the graphite matrix (14) without the PCM (6) has a relative density of 75-1500 g/l, and in particular of 75-300 g/l, and the amount of PCM (6) which is introduced into the matrix (14) is such that the composite accumulator material has a residual porosity of 2-60%, and in particular 5-30%.

2. Device for accumulating heat or cold with the aid of a material which undergoes a phase transition (PCM), characterized in that the material (6) which undergoes the phase transition is embedded in a matrix (14) of compressed, expanded graphite, together forming a composite accumulator material, the graphite matrix being produced by compressing expanded graphite, in that the phase transition takes place between two solid states of aggregation or between a solid and a liquid state of aggregation or between two liquid states of aggregation, and in that the graphite matrix (14) without the PCM (6) has a relative density of 75-1500 g/l, and in particular of 75-300 g/l, and the amount of PCM (6) which is introduced into the matrix (14) is such that the composite accumulator material has a residual porosity of 2-60%, and in particular 5-30%.

3. Method according to Claim 1, characterized in that the phase transition of the PCM (6) takes place in the temperature range from -25°C to 150°C.

4. Composite accumulator material, in particular for a method/system according to one of the preceding claims, having a material (6) which undergoes a phase transition and is embedded in a matrix (14) of compressed, expanded graphite.

5. Composite accumulator material according to Claim 4, characterized in that the PCM (6) is water.

6. Composite accumulator material according to Claim 4, characterized in that the PCM (6) consists of a mixture, in particular a eutectic or congruently melting mixture, of one or more of the following components:
| | | |
|---|---|---|
| CaBr₂ | NaCl | Al(NO₃)₂ |
| CaCl^{·}6H₂O | NaF | Ca(NO₃)₂ |
| CaCl₂ | NaOH | Cd(NO₃)₂ |
| KF | NaOH.3.5H₂O | Co(NO₃)₂ |
| KCl | Na₂HPO₄ | KNO₃ |
| KF^{·}4H₂O | Na₂SO₄ | LiNO₃ |
| LiClO₃^{·}3H₂O | Na₂SO₄^{·}10H₂O | Mg(NO₃)₂ |
| MgSO₄ | NH₄Cl | NaNO₃ |
| MgCl | NH₄H₂PO₄ | Ni(NO₃)₂ |
| ZnCl₂.2.5H₂O | NH₄HCO₃ | Zn(NO₃)₂ |
| ZnSO₄ | NH₄NO₃ | Zn(NO₃)₂^{·}6H₂O |
| Ba(OH)₂ | NH₄F | Cu(NO₃)₂ |
| H₂O | (NH₄)₂SO₄ | Acetic acid |
| SO₃^{·}2H₂O | | Acetates |

7. Composite accumulator material according to Claim 4, characterized in that the PCM consists of a eutectic or congruently melting mixture of one or more of the following components:
paraffins, fatty acids, oligomers, glycols, alcohols, caprylic acid.

8. Composite accumulator material according to Claim 4, characterized in that the PCM is a clathrate-forming substance.

9. Method for producing a composite accumulator material according to one of the preceding Claims 4 to 8, characterized in that the PCM (6) is introduced in liquid form into a matrix (2; 14), which is produced by compressing expanded graphite, by vacuum impregnation, as a result of the graphite matrix (2; 14) being evacuated and, in the evacuated state, being connected to a container (12) holding the liquid PCM (6), so that the liquid PCM (6) is sucked into the graphite matrix (2; 14).

10. Method according to Claim 9, characterized in that the graphite matrix (2; 14), prior to the impregnation, is evacuated to a pressure of less than 10 mbar, in particular to a pressure of less than 10⁻² mbar.

11. Method according to Claim 9 or 10, characterized in that the PCM (6), prior to the impregnation, is heated to above its melting temperature, at most to the evaporation temperature of the PCM.

12. Method according to one of Claims 9 to 11, characterized in that the graphite matrix (2; 14), prior to the impregnation, is heated to at most the evaporation temperature of the PCM.

13. Method according to one of Claims 10 to 12, characterized in that the graphite matrix (2; 14) and the PCM (6) together are heated to above the melting temperature and at most to the evaporation temperature of the PCM.

14. Method according to at least one of Claims 9 to 13, characterized in that the graphite matrix (2; 14), after the impregnation in the container (8), remains combined with liquid PCM (6) and is cooled to a temperature above the melting temperature of the PCM, preferably to room temperature.

15. Method for producing a composite accumulator material according to one of the preceding Claims 4 to 8, characterized in that the PCM (6) is heated in liquid form and the graphite matrix (2; 14) remains immersed therein for a certain time, until the liquid PCM has penetrated into the matrix.

16. Method according to Claim 15, characterized in that liquid PCM (6), with the matrix (2; 14) immersed therein, is cooled to above the melting temperature.

17. Method according to Claim 15 or 16, characterized in that the PCM (6) boils during the impregnation.

18. Method according to one of Claims 15 to 17, characterized in that the liquid PCM (6) and the graphite matrix (2; 14) immersed therein are jointly heated.

## Revendications

1. Procédé pour accumuler de la chaleur ou du froid à l'aide d'un matériau passant par une transition de phase (PCM), caractérisé en ce que le matériau (6) passant par la transition de phase est incorporé dans une matrice en graphite expansé, compacté, en formant avec elle un matériau composite accumulateur, la matrice de graphite étant produite par compactage de graphite expansé, en ce que la transition de phase s'effectue entre deux états solides ou entre un état solide et un état liquide ou entre deux états liquides, et en ce que la matrice de graphite (14) sans PCM (6) possède un poids spécifique de 75 à 1500 g/l, et en particulier de 75 à 300 g/l, et du PCM (6) est introduit dans la matrice (14) en une quantité suffisante pour que le matériau composite accumulateur présente une porosité résiduelle de 2 à 60 % et en particulier de 5 à 30 %.

2. Dispositif pour accumuler de la chaleur ou du froid à l'aide d'un matériau passant par une transition de phase (PCM), caractérisé en ce que le matériau (6) passant par la transition de phase est incorporé dans une matrice en graphite expansé, compacté, en formant avec elle un matériau composite accumulateur, la matrice de graphite étant produite par compactage de graphite expansé, en ce que la transition de phase s'effectue entre deux états solides ou entre un état solide et un état liquide ou entre deux états liquides, et en ce que la matrice de graphite (14) sans PCM (6) possède un poids spécifique de 75 à 1500 g/l, et en particulier de 75 à 300 g/l, et du PCM (6) est introduit dans la matrice (14) en une quantité suffisante pour que le matériau composite accumulateur présente une porosité résiduelle de 2 à 60 % et en particulier de 5 à 30 %.

3. Procédé selon la revendication 1, caractérisé en ce que la transition de phase du PCM (6) s'effectue dans la plage de températures de -25°C à 150°C.

4. Matériau composite accumulateur, en particulier pour un procédé/système selon l'une des revendications précédentes, comportant un matériau (6) passant par une transition de phase, qui est incorporé dans une matrice (14) en graphite expansé, compacté.

5. Matériau composite accumulateur selon la revendication 4, caractérisé en ce que le PCM (6) est de l'eau.

6. Matériau composite accumulateur selon la revendication 4, caractérisé en ce que le PCM (6) est constitué par un mélange, en particulier par un mélange eutectique ou à fusion congruente, d'un ou de plusieurs des composants suivants :
| | | |
|---|---|---|
| CaBr₂ | NaCl | Al(NO₃)₂ |
| CaCl•6H₂O | NaF | Ca(NO₃)₂ |
| CaCl₂ | NaOH | Cd(NO₃)₂ |
| KF | NaOH•3,5H₂O | Co(NO₃)₂ |
| KCl | Na₂HPO₄ | KNO₃ |
| KF•4H₂O | Na₂SO₄ | LiNO₃ |
| LiClO₃•3H₂O | Na₂SO₄•10H₂O | Mg(NO₃)₂ |
| MgSO₄ | NH₄Cl | NaNO₃ |
| MgCl | NH₄H₂PO₄ | Ni(NO₃)₂ |
| ZnCl₂•2,5H₂O | NH₄HCO₃ | Zn(NO₃)₂ |
| ZnSO₄ | NH₄NO₃ | Zn(NO₃)₂•6H₂O |
| Ba(OH)₂ | NH₄F | Cu(NO₃)₂ |
| H₂O | (NH₄)₂SO₄ | Acide acétique |
| SO₃•2H₂O | | Acétates |

7. Matériau composite accumulateur selon la revendication 4, caractérisé en ce que le PCM est constitué par un mélange eutectique ou à fusion congruente d'un ou de plusieurs des composants suivants :
paraffines, acides gras, oligomères, glycols, alcools, acide caprylique.

8. Matériau composite accumulateur selon la revendication 4, caractérisé en ce que le PCM est une substance formant des clathrates.

9. Procédé pour produire un matériau composite accumulateur selon l'une des revendications précédentes 4 à 8, caractérisé en ce que le PCM (6) est introduit sous forme liquide, par imprégnation sous vide, dans une matrice (2 ; 14) qui est produite par compactage de graphite expansé, ceci grâce au fait que la matrice de graphite (2 ; 14) est mise sous vide et est reliée, dans l'état sous vide, à un récipient (12) contenant le PCM liquide (6), afin que le PCM liquide (6) soit aspiré dans la matrice de graphite (2 ; 14).

10. Procédé selon la revendication 9, caractérisé en ce que la matrice de graphite (2 ; 14) est, avant l'imprégnation, mise sous vide à une pression inférieure à 10 mbar, en particulier à une pression inférieure à 10⁻² mbar.

11. Procédé selon la revendication 9 ou 10, caractérisé en ce que le PCM (6) est, avant l'imprégnation, échauffé au-delà de la température de fusion, au maximum jusqu'à la température d'évaporation, du PCM.

12. Procédé selon l'une des revendications 9 à 11, caractérisé en ce que la matrice de graphite (2 ; 14) est, avant l'imprégnation, échauffée au maximum jusqu'à la température d'évaporation du PCM.

13. Procédé selon l'une des revendications 10 à 12, caractérisé en ce que la matrice de graphite (2 ; 14) et le PCM (6) sont échauffés ensemble au-delà de la température de fusion, au maximum jusqu'à la température d'évaporation, du PCM.

14. Procédé selon l'une au moins des revendications 9 à 13, caractérisé en ce que la matrice de graphite (2 ; 14), après l'imprégnation dans le récipient (8), reste reliée au PCM liquide (6) et est refroidie jusqu'à une température supérieure à la température de fusion du PCM, de préférence jusqu'à la température ambiante.

15. Procédé pour produire un matériau composite accumulateur selon l'une des revendications précédentes 4 à 8, caractérisé en ce que le PCM (6) sous forme liquide est chauffé et la matrice de graphite (2 ; 14) demeure un certain temps immergée dans ce dernier, jusqu'à ce que le PCM liquide ait pénétré dans la matrice.

16. Procédé selon la revendication 15, caractérisé en ce que le PCM liquide (6), avec la matrice (2 ; 14) qui y est immergée, est refroidi jusqu'audessus de la température de fusion.

17. Procédé selon la revendication 15 ou 16, caractérisé en ce que le PCM (6) bout pendant l'imprégnation.

18. Procédé selon l'une des revendications 15 à 17, caractérisé en ce que le PCM liquide (6) et la matrice de graphite (2 ; 14), immergée dans ce dernier, sont chauffés conjointement.
